# EUROPÄISCHE PATENTANMELDUNG

(11) **EP 2 148 410 A1**
(43) Veröffentlichungstag der Anmeldung: **27.01.2010**
(21) Anmeldenummer: 08013097.4
(22) Anmeldetag: 21.07.2008
(51) Int. Cl.: H02K 3/18

(54) **Elektrische Maschine mit stufenförmigem Wicklungsaufbau**

(71) Anmelder: Siemens Aktiengesellschaft, 80333 München (DE)
(72) Erfinder: Vollmer, Rolf, 36129 Gersfeld (DE)

(57) **Zusammenfassung**

Es sollen elektrische Maschinen zum Direktantrieb oder zum Bremsen mit hinsichtlich Wirkungsgrad und Wärmeabtransport verbesserten Spulen vorgeschlagen werden. Es wird daher eine elektrische Maschine mit einem Spulenkörper (1) und einer Wicklung (3) vorgeschlagen, die mehrere Windungen aufweist und auf den Spulenkörper (1) gewickelt ist. Jede der mehreren Windungen liegt exakt in einer jeweiligen Ebene. Jeweils zwei der mehreren Windungen sind an je einem ihrer Enden mit einem Verbindungsstück miteinander verbunden, wobei die Hauptrichtungskomponente der Ausrichtung des Verbindungsstücks senkrecht zu der Ebene einer der beiden Windungen steht. Damit lassen sich axial nebeneinander angeordnete Windungen miteinander verbinden, wobei jede Windung auf konzentrischen Kreisen liegt. Damit lassen sich Hohlräume in den Nuten vermindern, insbesondere wenn Flachdraht verwendet wird.

## Beschreibung

Die vorliegende Erfindung betrifft eine elektrische Maschine zum Direktantrieb oder zum Bremsen mit einem Spulenkörper und einer Wicklung, die mehrere Windungen aufweist und auf den Spulenkörper gewickelt ist. Insbesondere betrifft die vorliegende Erfindung eine Transversalflussmaschine bzw. einen zylindrischen Linearmotor.

Bei der Herstellung von Spulen für Elektromagnete wird ein Draht üblicherweise in einer Lage schraubenförmig und in mehreren Lagen übereinander spiralförmig gewickelt. Dabei entstehen in den Bereichen der untersten und obersten Lage sowie an den Seiten der Wicklungen Hohlräume. Die Hohlräume führen zu einer verringerten Wärmeleitfähigkeit und damit zu einer geringeren Leistungsfähigkeit des mit dem Elektromagneten betriebenen Systems, z. B. eines zylindrischen Linearmotors. Gerade bei elektromagnetischen Direktantrieben mit geringen Feldgeschwindigkeiten ist eine hohe Ausnutzung wichtig, um die Kosten gering zu halten. Folglich ist man bestrebt, eine möglichst hohe Nutfüllung zu erzielen.

Aus der Druckschrift DE 10 2005 027 433 A1 ist ein Verfahren zum Wickeln eines Wicklungsdrahts auf einen Wicklungsträger bekannt. Der Wicklungsträger weist eine um eine Symmetrieachse verlaufende, nach radial außen offene Wicklungsnut mit einem radial innen angeordneten Nutgrund auf. Auf den Nutgrund wird eine erste Windungslage eines Wicklungsdrahts gewickelt, und auf die jeweils unmittelbar zuvor gewickelte Windungslage werden weitere Windungslagen gewickelt. Zumindest beim Wickeln der weiteren Windungslagen wird jeweils mindestens eine Windung der jeweiligen weiteren Windungslage von einem ersten Windungsleger und die jeweils übrigen Windungen der jeweiligen weiteren Windungslage von einem zweiten Windungsleger gewickelt. Dadurch verlaufen sowohl die erste Windung als auch die letzte Windung der Wicklung in der radial äußeren Windungslage.

Generell wird bei dem bekannten Wicklungsverfahren bei denen spiralförmig bzw. schraubenförmig gewickelt wird, hingenommen, dass aufgrund der entstehenden Hohlräume höhere thermische Widerstände auftreten. Lösungen den thermischen Widerstand zu reduzieren sind bislang nicht bekannt.

Die Aufgabe der vorliegenden Erfindung besteht somit darin, die Leistungsfähigkeit einer elektrischen Maschine, die zum Direktantrieb oder zum Bremsen geeignet ist, zu steigern.

Erfindungsgemäß ist diese Aufgabe gelöst durch eine elektrische Maschine zum Direktantrieb oder zum Bremsen mit einem Spulenkörper und einer Wicklung, die mehrere Windungen aufweist und auf den Spulenkörper gewickelt ist, wobei jede der mehreren Windungen exakt in einer jeweiligen Ebene liegt und jeweils zwei der mehreren Windungen an je einem ihrer Enden mit einem Verbindungsstück miteinander verbunden sind, wobei die Hauptrichtungskomponente der Ausrichtung des Verbindungsstücks senkrecht zu der Ebene einer der beiden Windungen steht.

In vorteilhafter Weise wird durch den erfindungsgemäßen Aufbau der Wicklung eine verbesserte Nutfüllung erreicht. Diese verbesserte Nutfüllung führt zu einem verbesserten magnetischen Wirkungsgrad, aber auch zu einer Verringerung des Wärmewiderstands. Damit lässt sich insgesamt die Leistungsfähigkeit der elektrischen Maschine steigern.

Jede der Windungen der elektrischen Maschine kann ringförmig ausgebildet sein. Alternativ können die Windungen selbstverständlich auch rechteckförmig aufgebaut sein oder eine andere Kontur besitzen.

Vorzugsweise sind die mehreren Windungen auch radial übereinander auf konzentrischen Kreisen angeordnet. Somit lässt sich nicht nur axial, sondern auch radial eine sehr kompakte Wicklung erzielen. Dabei ist es von besonderem Vorteil, wenn ein Radialverbindungsstück zum Verbinden radial übereinander gelegener Windungen mit seiner Hauptrichtungskomponente radial ausgerichtet ist. Die Ausrichtung eines Leiterstücks entspricht hierbei immer der Stromrichtung durch dieses Leiterstück. Die räumlichen Richtungskomponenten beziehen sich auf ein zylindersymmetrisches System, wobei die erste Richtungskomponente in axialer Richtung, die zweite Richtungskomponente in radialer Richtung und die dritte Richtungskomponente in Umfangsrichtung verläuft. Die Hauptausrichtungskomponente eines Leiterstücks ist dann diejenige Komponente dieser drei Komponenten, die am größten ist.

Weiterhin kann die Wicklung mit einem Leiter ausgebildet sein, dessen Querschnitt rechteckförmig oder quadratisch ist. Hierdurch lassen sich die höchsten Nutfüllungen erzielen.

Entsprechend einer Ausführungsvariante kann die Anzahl an Windungen axial nebeneinander ein Vielfaches von 2 sein und die Anschlüsse der Wicklung können radial oben liegen. Ein derartiger Aufbau lässt sich insbesondere für zylindrische Linearmotoren mit innenliegendem Sekundärteil nutzen.

Gemäß einer anderen Ausführungsform kann die Anzahl an Windungen radial übereinander ein Vielfaches von 2 sein, und die Anschlüsse der Wicklung können an einer Stirnseite des Spulenkörpers liegen. Damit kann dem Umstand Rechnung getragen werden, dass beispielsweise nur eine stirnseitige Versorgung der Wicklung möglicht ist.

Gemäß einer weiteren Ausführungsform ist vorgesehen, dass die Anschlüsse der Wicklung nach innen gerichtet sind, und ein Außenläufer angetrieben werden soll. Somit können verhältnismäßig viele Antriebstypen mit dem erfindungsgemäßen Wicklungsaufbau ausgestattet werden.

Speziell kann die erfindungsgemäße elektrische Maschine als Transversalflussmaschine oder, wie bereits angedeutet, als zylindrischer Linearmotor ausgebildet sein. Bei derartigen Antrieben können die ringförmigen Spulen mit hoher Nutfüllung die Leistungsfähigkeit des Antriebs deutlich steigern.

Die vorliegende Erfindung wird nun anhand der beigefügten Zeichnungen näher erläutert, in denen zeigen:
- FIG 1: eine Flachdrahtspule mit zwei Windungen in axialer Blickrichtung gemäß dem Stand der Technik;
- FIG 2: die Flachdrahtspule von FIG 1 im Querschnitt;
- FIG 3: eine erfindungsgemäße Flachdrahtspule mit vier Win- dungen in axialer Blickrichtung;
- FIG 4: die Flachdrahtspule von FIG 3 im Querschnitt;
- FIG 5: die Flachdrahtspule von FIG 3 in der Draufsicht in radialer Richtung;
- FIG 6: ein erstes Wicklungsschema für außenliegende An- schlüsse;
- FIG 7: ein zweites Wicklungsschema für innengerichtete An- schlüsse;
- FIG 8: ein drittes Wicklungsschema für seitliche Anschlüs- se und
- FIG 9: ein viertes Wicklungsschema für seitliche Anschlüs- se.

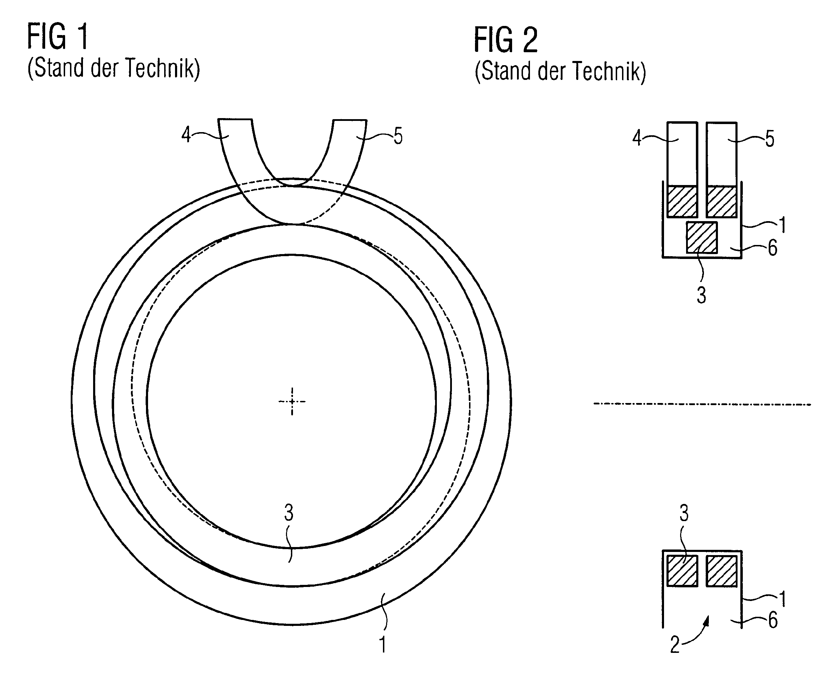

Die nachfolgend näher geschilderten Ausführungsbeispiele stellen bevorzugte Ausführungsformen der vorliegenden Erfindung dar. Zunächst wird jedoch anhand der FIG 1 und 2 eine herkömmlich gewickelte Flachdrahtspule für eine elektrische Maschine beschrieben. Die Spule besitzt einen Spulenkörper 1, der eine radial nach außen gerichtete Nut 2 besitzt. In die Nut 2 wird ein Flachdraht 3 mit quadratischem oder rechteckförmigem Querschnitt eingewickelt. Die Nuttiefe entspricht in etwa der doppelten Dicke des Flachdrahts 3. In die Nut 2 können zwei vollständige Windungen dieses Flachdrahts 3 eingewickelt werden. Die Spulenanschlüsse 4 und 5 ragen beide radial nach außen ab. Der erste Anschluss 4 schließt an einen Spulenabschnitt an, der zunächst in der Oberlage verläuft und nach einer halben Windung bereits in der Unterlage weiterläuft. Nach einer weiteren halben Windung bildet der Draht die einzige Windung in der Unterlage, was FIG 2 oben zu entnehmen ist. Der Draht 3 läuft dann eine weitere halbe Windung in der Unterlage weiter, was FIG 2 unten zu entnehmen ist. In der letzten halben Windung steigt der Flachdraht 3 allmählich wieder zur Oberlage auf und endet in dem zweiten Anschluss 5.

Aus FIG 2 sind die dabei entstehenden Hohlräume 6 gut zu entnehmen. Diese Hohlräume 6 entstehen, da im oberen Teil der Spule in der Unterlage nur ein Draht 3 verläuft und im unteren Teil der Spule die Oberlage gar nicht genutzt werden kann. Mit dieser Wicklungstechnik ist es nur möglich, zwei Windungen in die Nut 2 einzuwickeln. Damit lässt sich nur ein entsprechend vermindertes Magnetfeld erzeugen. Außerdem ist der Wärmewiderstand von dem Flachdraht 3 über die Hohlräume 6 zum Spulenkörper 1 verhältnismäßig hoch. Der Wirkungsgrad der korrespondierenden elektrischen Maschine ist entsprechend niedrig.

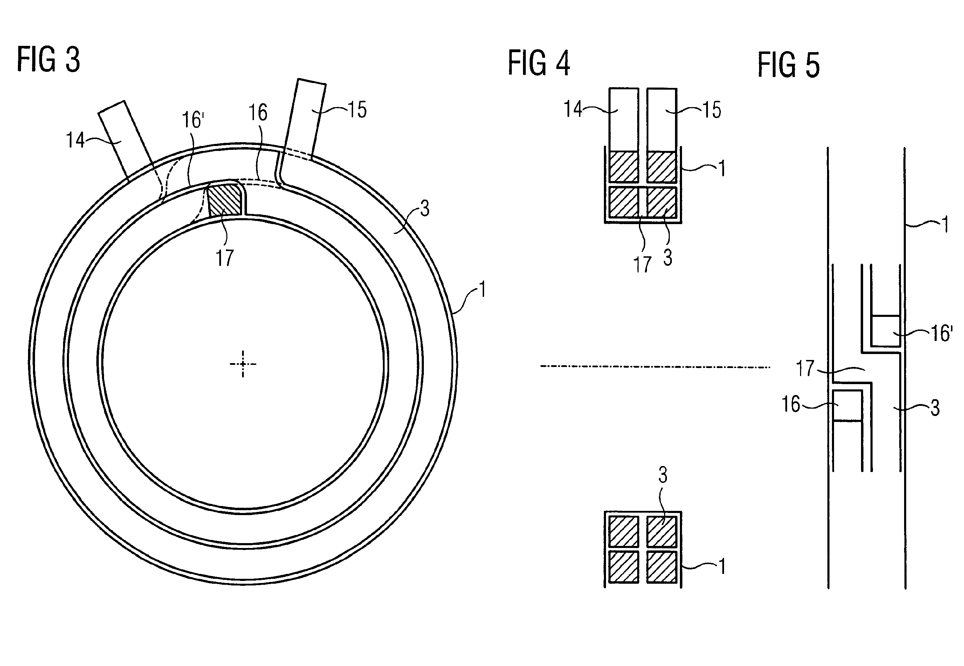

Um den Wirkungsgrad eines Direktantriebs, z.B. eines zylindrischen Linearmotors, oder einer Bremse zu steigern, werden anders bewickelte Spulen vorgeschlagen. In FIG 3 ist eine derartige Spule in der Seitenansicht, d.h. in axialer Richtung, schematisch dargestellt. Die Spule besitzt einen stufenförmigen Wicklungsaufbau mit vier Windungen. In dem gleichen Spulenkörper 1 wie in dem Beispiel der FIG 1 und 2, können mit der erfindungsgemäßen Wicklungstechnik also doppelt so viele Windungen untergebracht werden. Damit wird auch die Nutfüllung verdoppelt. Der Querschnitt in FIG 4 zeigt, dass die Spule eine Oberlage und eine Unterlage mit jeweils zwei nebeneinander gelegenen Windungen aufweist. D. h. die Windungen liegen in konzentrischen Kreisen übereinander und in parallelen Ebenen nebeneinander. Verbunden sind sie radial bzw. axial durch entsprechende Verbindungsstücke, die hier auch als radiale Stufen 16 bzw. 16' und seitliche Stufen 17 bezeichnet werden.

Der Verlauf der Wicklung kann wie folgt erklärt werden: Die Wicklung beginnt z. B. an dem radial nach außen ragenden Anschluss 15 und verläuft zunächst bezogen auf den Schnitt von FIG 4 in der rechten Hälfte des Spulenkörpers 1 in der Oberlage. Nach einer vollständigen Windung in der Oberlage wird der Flachdraht 3 in einer radialen Stufe 16 (Radialverbindungsstück) kurz vor dem Anschlussstück 15 in die Unterlage geführt. Dort verläuft er eine weitere komplette Windung bis zu einer seitlichen Stufe 17 (axiales Verbindungsstück). Hier wird er kurz vor der radialen Stufe 16 in die Unterlage der linken Hälfte des Spulenkörpers 1 geführt. Dann verläuft er weiter stets im gleichen Drehsinn wiederum für eine komplette Windung. Kurz vor der seitlichen Stufe 17 wird der Flachdraht 3 in einer weiteren radialen Stufe 16' nach oben in die Oberlage geführt. Hier verläuft er wieder für eine komplette Windung und endet schließlich kurz vor der radialen Stufe 16' in dem nach außen ragenden Anschluss 14.

In FIG 5 ist eine Draufsicht in radialer Richtung auf die Spule von FIG 3 wiedergegeben. Der Übersicht halber sind dort nur die beiden radialen Stufen 16 und 16' in der linken und der rechten Lage sowie die seitliche Stufe 17 dargestellt. Es ist zu erkennen, dass die Stufen 16, 17 und 16' in Umfangsrichtung jeweils versetzt sind. Jeder einzelne Versatz ist etwas größer als die Dicke des Flachdrahts 3.

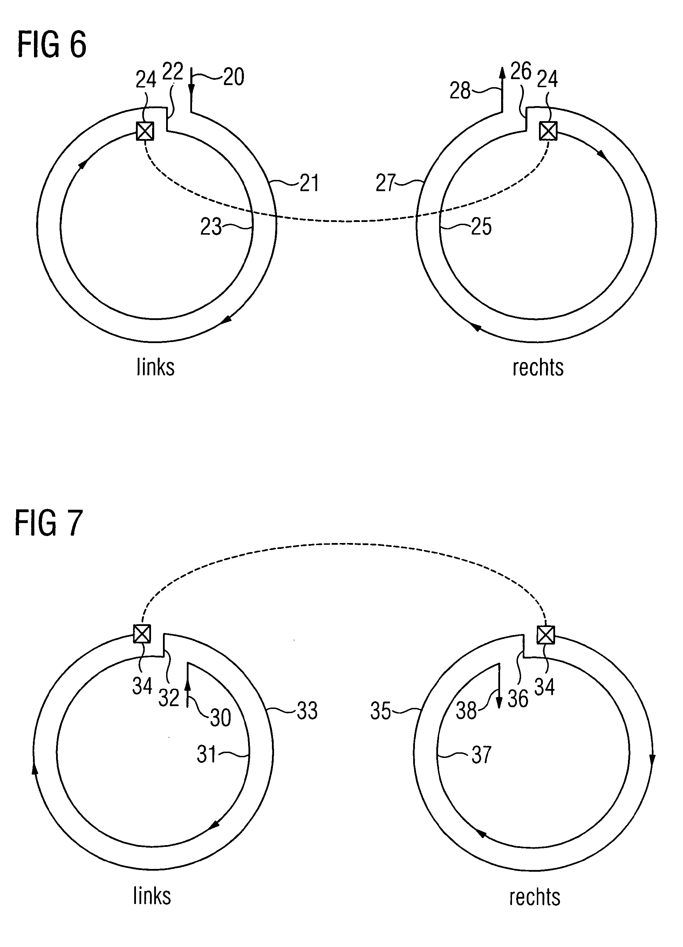

Im Folgenden werden vier Wicklungsschemata beispielhaft dargstellt, mit denen die vorliegende Erfindung realisiert werden kann. Das Wicklungsschema von FIG 6 entspricht demjenigen der Spule der FIG 3 bis 5. Bei diesem Wicklungsschema wird zunächst die linke Seite der Nut und dann die rechte Seite der Nut des Spulenkörpers bewickelt. Das Wicklungsschema wird ausgehend von einem ersten Anschluss 20 (korrespondierend mit dem Anschluss 15 von FIG 3) bis zum zweiten Anschluss 28 (korrespondierend mit dem Anschluss 14 von FIG 3) als Ausgang nochmals mit anderen Worten erläutert, so dass der Zusammenhang mit der realen Spule (FIG 3 bis 5) besser erkannt werden kann. Beginnend von dem ersten Anschluss 20, der radial nach außen ragt, verläuft die Wicklung in einem Windungsabschnitt 21 (hier im Wesentlichen eine vollständige Windung, wie die übrigen so genannten "Windungsabschnitte" auch)in der Oberlage bis zu einer radialen Stufe 22 (16 in FIG 3), weiter in einem Windungsabschnitt 23 bis zu einer seitlichen Stufe 24. Diese Stufe 24 ist durch ein Verbindungsstück realisiert, welches lotrecht zur Zeichenebene verläuft. Das Wicklungsschema ist auf der rechten Seite von FIG 6 fortgeführt, was durch die gestrichelte Verbindungslinie angedeutet ist. Die Windung verläuft also weiter von der seitlichen Stufe 24 über den Windungsabschnitt 25 zur radialen Stufe 26 (16' in FIG 3). Von dort geht es über den letzten Windungsabschnitt 27 in der Oberlage auf der rechten Seite zum zweiten Anschluss 28, der gegenüber dem ersten Anschluss 20 in Umfangsrichtung nach links versetzt ist. Die beiden radialen Stufen 22 und 26 sind durch Verbindungsstücke realisiert, deren Hauptrichtungskomponente in radialer Richtung verläuft, also in der Ebene der jeweiligen Windungen 21, 23 bzw. 25, 27. Die seitliche Stufe 24 hingegen wird durch ein Verbindungsstück realisiert, das in axialer Richtung ausgerichtet ist. D. h. der Strom durch die Flachdrahtspule verläuft in der seitlichen Stufe 24 zumindest annähernd in axialer Richtung. Die Hauptrichtungskomponente dieses Verbindungsstücks steht also senkrecht auf der Ebene der Spule 23 oder 25.

Da die Anschlüsse 20 und 28 nach außen ragen, ist die Spulenanordnung insbesondere für Innenläufer geeignet.

Ein zweites Wicklungsschema ist in FIG 7 dargestellt. Auf der linken Seite ist wiederum die linke Lage und auf der rechten die rechte Lage der vier Windungen dargestellt. Hier befinden sich die Anschlüsse 30 und 38 in der Unterlage. Sie können damit radial nach innen gerichtet sein. Es bleibt jedoch unbenommen, die Anschlüsse 30, 38 in der Unterlage auch axial nach außen zu führen, was auch in dem Beispiel von FIG 6 möglich wäre. Gemäß dem Schema von FIG 7 verläuft die Wicklung zunächst nach dem ersten Anschluss 30 in einem ersten Windungsabschnitt 31 zu einer radialen Stufe 32 nach oben in die Oberlage der linken Spulenhälfte. Von dort verläuft sie weiter in einem Windungsabschnitt 33 bis zu einer seitlichen Stufe 34. Hier wird die Spulenseite gewechselt. Der Verlauf der rechten Spulenlage ist in FIG 7 rechts dargestellt. Die Wicklung verläuft also weiter in der Oberlage in einem Windungsabschnitt 35 bis zu einer radialen Stufe 36 knapp vor der seitlichen Stufe 34. Die Wicklung verläuft dann dementsprechend in der Unterlage in einem Windungsabschnitt 37 weiter bis zum zweiten Anschluss 38.

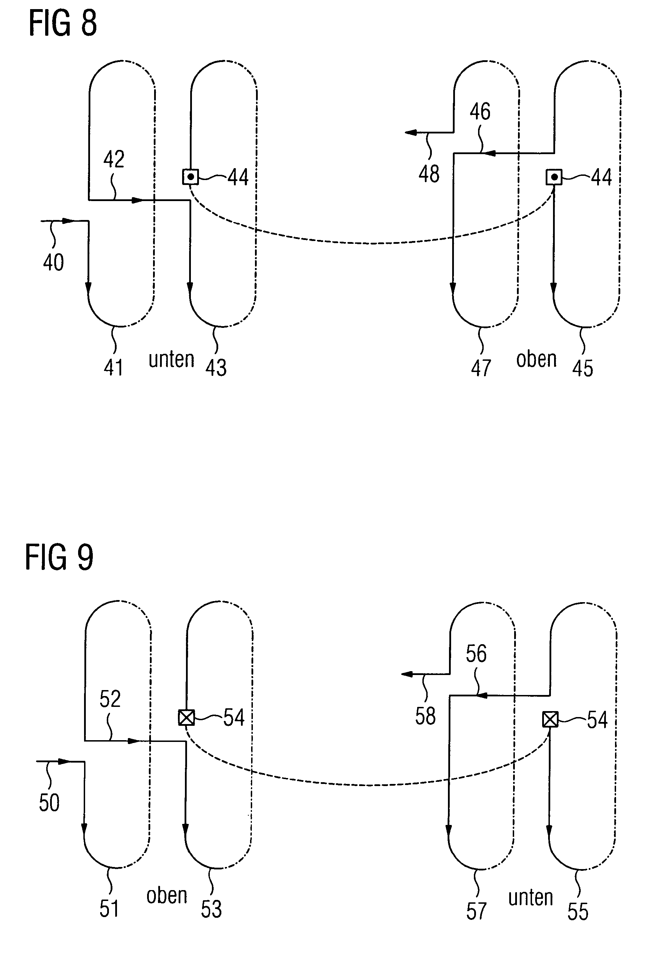

Ein drittes Wicklungsschema ist in FIG 8 dargestellt. Hier verläuft die Wicklung zunächst über beide Seiten in der Unterlage und dann zurück über beide Seiten in der Oberlage. Der erste Anschluss 40 befindet sich also auf einer Seite in der Unterlage und der zweite Anschluss 48 befindet sich auf der gleichen Seite in der Oberlage. Konkret verläuft die Wicklung von dem ersten Anschluss 40 über einen Windungsabschnitt 41 in der Unterlage bis zu einer seitlichen Stufe 42 (axiales Verbindungsstück). Dort wird die Seite gewechselt und die Wicklung verläuft weiter in einem zu dem Windungsabschnitt 41 parallelen Windungsabschnitt 43 bis zu einer radialen Stufe 44 realisiert durch ein Radialverbindungsstück. Die Wicklung wird hier in die Oberlage geführt, deren Wicklungsteilschema in FIG 8 rechts dargestellt ist. Von der radialen Stufe 44 folgt die Wicklung weiter in einem Windungsabschnitt 45 bis zu einer seitlichen Stufe 46 (axiales Verbindungsstück), in der auf die linke Seite gewechselt wird. Schließlich läuft die Wicklung noch weiter in der Oberlage durch einen Windungsabschnitt 47 bis zu dem zweiten Ausgang 48. Der zweite Anschluss 48 kann von der Oberlage entsprechend axial auf die Seite oder radial nach oben geführt werden.

Ein viertes Wicklungsschema für vier Windungen ist in FIG 9 wiedergegeben. Hier wird zunächst die Oberlage und anschließend die Unterlage gewickelt. Ausgehend von dem ersten Anschluss 50 über einen ersten Windungsabschnitt 51 folgt die Wicklung einer seitlichen Stufe 52 und einem weiteren Windungsabschnitt 53 bis zu einer radialen Stufe 54. Dort wird die Wicklung in die Unterlage geführt, verläuft weiter in einem Windungsabschnitt 55 bis zu einer seitlichen Stufe 56 und einem weiteren Windungsabschnitt 57 bis zum zweiten Anschluss 58. Hier befindet sich also der erste Anschluss in der Oberlage und der zweite Anschluss in der Unterlage. Beide Anschlüsse können wieder radial oder axial nach außen geführt werden, sie befinden sich aber auf einer Seite der Spule, hier links.

Es versteht sich von selbst, dass das Wicklungsschema auch spiegelsymmetrisch verwendet werden kann, so dass die Anschlüsse beispielsweise bei den Schemata nach FIG 8 und FIG 9 auf der rechten Seite liegen. Ebenso kann bei den Schemata nach FIG 6 und FIG 7 zuerst die rechte Lage und dann die linke Lage gewickelt werden.

Die Ausführungsbeispiele betreffen hier ringförmige Spulengeometrie. Die Spulengeometrie kann aber ebenso rechteckförmig oder eine andere Form besitzen.

Die Windungen der Spule mit einer Windungszahl w > 1 werden erfindungsgemäß also nicht spiralförmig bzw. schraubenförmig gewickelt. Vielmehr befindet sich jede Windungslage auf konzentrischen Kreisen. Erreicht wird dies durch stufenförmiges Wickeln. In der Praxis können aber auch vorgefertigte, geschlitzte Ringe stufenförmig kontaktiert werden. Ebenso lassen sich stufenförmige Wicklungen durch Lasersintern, Gießen oder ähnliche Prozesse erzielen.

In den Ausführungsbeispielen der FIG 3 bis 9 wurden stets Spulen mit vier Windungen dargestellt. Grundsätzlich kann die Erfindung jedoch mit einer beliebigen Windungszahl w > 1 realisiert werden. Wenn die Anschlüsse jedoch nur entweder unten, oder oben oder nur auf einer Seite sein sollen, muss die Windungszahl ein Vielfaches von 2 sein. Insbesondere, wenn die Anschlüsse nur oben bzw. außen liegen sollen, muss die Zahl der Windungslagen axial nebeneinander ein Vielfaches von 2 sein.

Durch Spulen mit dem erfindungsgemäßen gestuften Aufbau ist es möglich die Hohlräume in den Bereichen der unteren und oberen Lagen sowie den Seitenbereichen zu vermeiden und eine bessere thermische Anbindung an gut Wärme leitende Teile zu ermöglichen. Die Spulen können passgenau in Spulenkörper eingelegt werden, wodurch die Nutfüllung entsprechend hoch ist. Die damit versehenen elektrischen Maschinen können damit kompakter gebaut bzw. mit höherer Leistung betrieben werden.

## Patentansprüche

1. Elektrische Maschine zum Direktantrieb oder zum Bremsen mit
- einem Spulenkörper (1) und
- einer Wicklung, die mehrere Windungen (21,23,25,27,31,33, 35,37,41,43,45,47,51,53,55,57) aufweist und auf den Spulenkörper (1) gewickelt ist,
**dadurch gekennzeichnet, dass**
- jede der mehreren Windungen (21,23,25,27,31,33,35,37,41, 43,45,47,51,53,55,57) exakt in einer jeweiligen Ebene liegt und
- jeweils zwei der mehreren Windungen an je einem ihrer Enden mit einem Verbindungsstück (16,16',17,22,24,26,32,34,36, 42,44,46,52,54,56) miteinander verbunden sind, wobei die Hauptrichtungskomponente der Ausrichtung des Verbindungsstücks senkrecht zu der Ebene einer der beiden Windungen steht.

2. Elektrische Maschine nach Anspruch 1, wobei jede der Windungen (21,23,25,27,31,33,35,37,41,43,45,47,51,53,55,57) U-förmig ausgebildet ist.

3. Elektrische Maschine nach Anspruch 2, wobei mehrere der Windungen (21,23,25,27,31,33,35,37,41,43,45,47,51,53,55,57) radial übereinander auf konzentrischen Kreisen angeordnet sind.

4. Elektrische Maschine nach Anspruch 3, wobei ein Radialverbindungsstück (16,16',17,22,24,26,32,34,36,42,44,46,52,54, 56) zum Verbinden radial übereinanderliegender Windungen mit seiner Hauptrichtungskomponente radial ausgerichtet ist.

5. Elektrische Maschine nach einem der vorhergehenden Ansprüche, wobei die Wicklung mit einem Leiter (3) ausgebildet ist, dessen Querschnitt rechteckförmig oder quadratisch ist.

6. Elektrische Maschine nach Anspruch 3 oder 4, wobei die Anzahl an Windungen (21,23,25,27,31,33,35,37,41,43,45,47,51, 53,55,57) axial nebeneinander ein Vielfaches von 2 ist und die Anschlüsse (14,15,20,28,30,38,40,48,50,58) der Wicklung radial oben liegen.

7. Elektrische Maschine nach Anspruch 3 oder 4, wobei die Anzahl an Windungen (21,23,25,27,31,33,35,37,41,43,45,47,51, 53,55,57) radial übereinander ein Vielfaches von 2 ist und die Anschlüsse der Wicklung an einer Stirnseite des Spulenkörpers (1) liegen.

8. Elektrische Maschine nach einem der Ansprüche 1 bis 5, bei der die Anschlüsse (14,15,20,28,30,38,40,48,50,58) der Wicklung nach innen gerichtet sind, und die einen Außenläufer besitzt.

9. Elektrische Maschine nach einem der vorhergehenden Ansprüche, die als Transversalflussmaschine ausgebildet ist.

10. Elektrische Maschine nach einem der vorhergehenden Ansprüche, die als zylindrischer Linearmotor ausgebildet ist.
